# EUROPÄISCHE PATENTANMELDUNG

(11) **EP 1 329 274 A1**
(43) Veröffentlichungstag der Anmeldung: **23.07.2003**
(21) Anmeldenummer: 03450011.6
(22) Anmeldetag: 14.01.2003
(51) Int. Cl.: B23B 51/02, B23B 27/14, B23B 27/18

(54) **Werkzeug mit Schneideinsatz**

(30) Priorität: 16.01.2002 AT 622002
(71) Anmelder: Johann Eberhard Gesellschaft m.b.H., 8503 St. Josef (AT)
(72) Erfinder: Eberhard, Helfried, 67350 Buswiller (FR)
(74) Vertreter: Gibler, Ferdinand, Dipl.-Ing. Dr. techn.

(57) **Zusammenfassung**

Werkzeug, z.B. Bohrer, Fräser od.dgl. mit zumindest einem eingesetzten Schneidelement (1), das in einem Schneidelement-Sitz des Werkzeugs mit diesem verbunden, vorzugsweise verlötet ist. Das zumindest eine Schneidelement (1) weist ein Mittel zur Positionierung (2) des Schneidelements (1) auf, das vor dem Verbinden mit einer Kante des Schneidelement-Sitzes in Anlage gebracht wird.

## Beschreibung

Die Erfindung betrifft ein Werkzeug, z.B. Bohrer, Fräser od.dgl. mit zumindest einem eingesetzten Schneidelement, das in einem Schneidelement-Sitz des Werkzeugs mit diesem verbunden, vorzugsweise verlötet ist.

Bei bekannten Werkzeugen werden Schneidelemente aus verschiedensten Materialien verwendet, die nach Herstellung des Werkzeug-Grundkörpers in diesen eingesetzt werden. Die vergleichsweise kleinen Schneidelemente können dabei aus einem, besondere Eigenschaften aufweisenden Material hergestellt sein, während der Werkzeug-Grundkörper keine besondere Materialqualität aufweisen muß. Probleme bereiten in der Praxis aber das exakte Einrichten der Schneidelemente auf dem zuvor aus dem Werkzeug gefrästen Schneidelement-Sitz, bevor sie mit diesem verlötet werden können. Dies geschieht mit einer speziellen Haltevorrichtung, welche aber beträchtliche Abweichungen von der Soll-Position des Schneidelements zuläßt.

Aufgabe der Erfindung ist es daher, ein Werkzeug der eingangs genannten Art anzugeben, bei dem während der Herstellung ein exaktes und schnelles Verbinden des Schneidelements mit dem Werkzeug ermöglicht wird.

Erfindungsgemäß wird dies dadurch erreicht, daß das zumindest eine Schneidelement ein Mittel zur Positionierung des Schneidelements aufweist, das vor dem Verbinden mit einer Kante des Schneidelement-Sitzes in Anlage gebracht wird.

Auf diese Weise können bei der Fertigung des erfindungsgemäßen Werkzeuges alle Schneidelemente in die gewünschte Position gebracht werden, ohne daß es zu einem Verrutschen der Schneidelemente und damit zu Ungenauigkeiten kommen kann. Es können daher engere Bauteiltoleranzen als bisher eingehalten werden, wodurch Nachbearbeitungsvorgänge wegfallen und die Ausschußrate verringert werden kann.

In weiterer Ausbildung der Erfindung kann das Mittel zur Positionierung des Schneidelements durch eine an dem Schneidelement vorgesehene Anschlagleiste gebildet sein.

Durch die Anschlagleiste wird ein sattes Anliegen an der Schneidelement-Sitzfläche ermöglicht.

Eine weitere Ausführungsform der Erfindung kann darin bestehen, daß das plattenförmig ausgebildete Schneidelement stirnseitig eine im spitzen Winkel zur Plattennormale angestellte, an sich bekannte Schneidfläche aufweist, und daß die Anschlagleiste entlang der der Schneidkante der Schneidfläche gegenüberliegenden Seite der Schneidfläche verläuft.

Die Ausrichtung der Anschlagleiste entlang der gesamten, der Schneidfläche gegenüberliegenden Seite ermöglicht ein exaktes Positionieren des Schneidelements.

Eine konstruktiv einfache Ausbildung der Anschlagleiste kann gemäß einem weiteren Ausführungsbeispiel der Erfindung darin bestehen, daß die Anschlagleiste durch einen parallel zur Schneidkante verlaufenden Ansatz der zur Schneidfläche benachbarten Seitenfläche des plattenförmigen Schneidelements gebildet ist.

Ein derartiger Ansatz kann in nur einem Arbeitsgang z.B. aus der Seitenfläche gefräst werden und verursacht daher einen geringen produktionstechnischen Aufwand.

Eine andere Variante der Erfindung kann darin bestehen, daß das Mittel zur Positionierung des Schneidelements durch zumindest zwei Anschlagnasen gebildet ist, welche ebenso wie eine Anschlagleiste ein sehr genaues und schnelles Ausrichten des Schneidelements auf dem Bohrkopf ermöglicht. Die Anschlagnasen haben gegenüber der Anschlagleiste den Vorteil, daß sie nur punktuell aufliegen und daher Unebenheiten besser ausgeglichen werden können.

Nachfolgend wird die Erfindung anhand der in den beigeschlossenen Zeichnungen dargestellten Ausführungsbeispiele eingehend erläutert. Es zeigt dabei
Fig.1 eine Draufsicht auf eine Ausführungsform eines Schneidelement zum Einsetzen in ein erfindungsgemäßes Werkzeug;
Fig.2 eine Stirnansicht des Schneidelements nach Fig.1;
Fig.3 eine Seitenansicht einer Ausführungsform eines erfindungsgemäßen Werkzeugs und
Fig.4 eine Draufsicht auf das Werkzeug gemäß Fig.3.

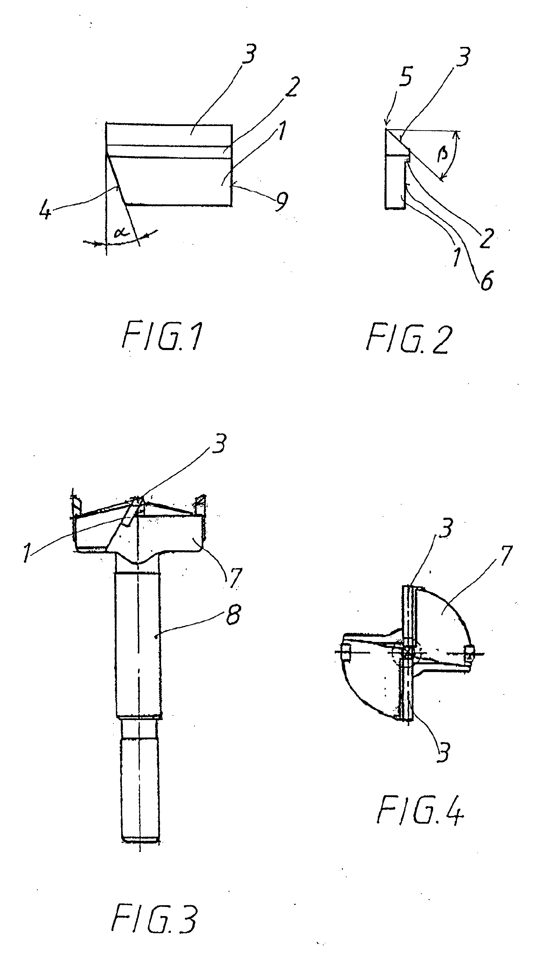

Fig.1 und 2 zeigen ein Schneidelement 1 für ein hartmetallbestücktes, spanabhebendes Werkzeug, z.B. einen Bohrer, einen Fräser, einen Oberfräser, eine Reibahle od. dgl., das bei der Herstellung des Werkzeugs in einen Schneidelement-Sitz des Werkzeugs eingesetzt und mit diesem verlötet oder auf eine andere Weise verbunden wird. Die genannten Arten von Werkzeugen unterliegen keinerlei Einschränkungen hinsichtlich ihrer Bauform. So kann das gezeigte Schneidelement z.B. Grundlage für die Herstellung von Holz-, Kunststoff- oder Metallbohrern oder anderen Bohrern sein. Dies gilt in gleicher Weise für die anderen in Frage kommenden Werkzeugtypen.

Das zu bestückende Werkzeug wird bevorzugt aus einem Werkzeugstahl gefertigt, das Schneidelement 1 kann aus einem Hartmetall, einer Keramik, aus Dia oder einem anderen geeigneten Material bestehen.

Fig.3 und 4 zeigen einen erfindungsgemäßen Bohrer 8 mit einem Bohrkopf 7, bei dem zwei Schneidelemente 1 bereits im Schneidelement-Sitz, in diesem Beispiel eine gefräste Fläche, die in der gezeigten Darstellung nicht sichtbar ist, positioniert und mit dem Bohrkopf 7 verlötet sind. Das Schneidelement 1 wird dazu jeweils auf den Schneidelement-Sitz angelegt und mittels einer Haltevorrichtung der Herstellungsanlage in eine vorherbestimmbare Position gebracht und mittels Silber- oder Sandwich-Lot verlötet. Die unter einem Winkel α angestellte Fläche 4 des Schneidelements 1 liegt im eingebauten Zustand im Bereich der Bohrerspitze am Bohrkopf 7 an, die gegenüberliegende Fläche 9 ragt im eingebauten Zustand über den Umfang des Bohrkopfes 7 hinaus.

Erfindungsgemäß weist das Schneidelement 1 ein Mittel 2 zur Positionierung des Schneidelements 1 im Schneidelement-Sitz auf, das vor dem Verbinden mit einer Kante des Schneidelement-Sitzes in Anlage gebracht wird.

Das in Fig.1 und 2 gezeigte Mittel 2 zur Positionierung des Schneidelements 1 ist durch eine an dem Schneidelement 1 vorgesehene Anschlagleiste 2 gebildet, kann aber ebenso durch gleichwertige andere Mittel ersetzt werden, z.B. durch zwei oder mehrere, am Schneidelement 1 vorgesehene Anschlagnasen oder -noppen. Auch kann die Anschlagleiste nicht durchgehend sondern mit Unterbrechungen ausgebildet sein.

Das plattenförmig ausgebildete Schneidelement 1 weist eine übliche, stirnseitig im spitzen Winkel β, z.B. 43°, zur Plattennormale angestellte Schneidfläche 3 mit einer Schneidkante 5 auf. Die Anschlagleiste verläuft dabei entlang der der Schneidkante 5 gegenüberliegenden Seite der Schneidfläche 1 und ist durch einen parallel zur Schneidkante 5 verlaufenden Ansatz 2 der zur Schneidfläche 1 benachbarten Seitenfläche 6 des plattenförmigen Schneidelements 1 gebildet.

Durch das Vorsehen der als Ansatz 2 ausgebildeten Anschlagleiste sitzt das plattenförmige Schneidelement 1 satt auf der Schneidelement-Sitzfläche des Bohrers 8 auf und ermöglicht dadurch ein genaues und schnelles Positionieren des Schneidelements 1.

## Patentansprüche

1. Werkzeug, z.B. Bohrer, Fräser od.dgl. mit zumindest einem eingesetzten Schneidelement, das in einem Schneidelement-Sitz des Werkzeugs mit diesem verbunden, vorzugsweise verlötet ist, **dadurch gekennzeichnet, daß** das zumindest eine Schneidelement (1) ein Mittel zur Positionierung (2) des Schneidelements (1) aufweist, das vor dem Verbinden mit einer Kante des Schneidelement-Sitzes in Anlage gebracht wird.

2. Werkzeug nach Anspruch 1, **dadurch gekennzeichnet, daß** das Mittel zur Positionierung des Schneidelements durch eine an dem Schneidelement (1) vorgesehene Anschlagleiste (2) gebildet ist.

3. Werkzeug nach Anspruch 2, **dadurch gekennzeichnet, daß** das plattenförmig ausgebildete Schneidelement (1) stirnseitig eine im spitzen Winkel (β) zur Plattennormale angestellte, an sich bekannte Schneidfläche (3) aufweist, und daß die Anschlagleiste (2) entlang der der Schneidkante (5) der Schneidfläche (1) gegenüberliegenden Seite der Schneidfläche (1) verläuft.

4. Werkzeug nach Anspruch 3, **dadurch gekennzeichnet, daß** die Anschlagleiste durch einen parallel zur Schneidkante (5) verlaufenden Ansatz (2) der zur Schneidfläche (1) benachbarten Seitenfläche (6) des plattenförmigen Schneidelements (1) gebildet ist.

5. Werkzeug nach Anspruch 1, **dadurch gekennzeichnet, daß** das Mittel zur Positionierung des Schneidelements (2) durch zumindest zwei Anschlagnasen gebildet ist.
